# EUROPEAN PATENT APPLICATION

(11) **EP 1 852 950 A2**
(43) Date of publication of application: **07.11.2007**
(21) Application number: 06425305.7
(22) Date of filing: 05.05.2006
(51) Int. Cl.: H02H 3/07

(54) **Protective device for electrical networks and for electrical user devices connected to an electrical network**

(71) Applicant: F.lli Franchini S.R.L., 47900 Rimini (RN) (IT)
(72) Inventor: Franchini, Pierpaolo, 47900 Rimini (RN) (IT); Carletti, Mauro, 47900 Rimini ( RN) (IT)
(74) Representative: Ghioni, Carlo Raoul Maria

(57) **Abstract**

A protective device (1) for electrical networks and for electrical user devices connected to an electrical network comprises at least a first circuit breaker (2) which can be inserted between an electricity supply (4) and a load (3), switchable between a normal closed condition and an open condition to selectively interrupt the power supply to the load (3); automatic reconnection means (5), acting on the first circuit breaker (2) to automatically switch the first circuit breaker (2) to the closed condition. The device (1) also comprises a second circuit breaker (6) operatively connected between the first circuit breaker (2) and the load (3), switchable between a closed position in which the first circuit breaker (2) and the load (3) are electrically connected and an open position in which the first circuit breaker (2) and the load (3) are electrically disconnected; a monitoring control unit (7) operatively connected to the first circuit breaker (2) and to the second circuit breaker (6) at least for switching the second circuit breaker (6) between the closed position and the open position.

## Description

The present invention relates to a protective device for electrical networks and for electrical user devices connected to an electrical network.

Protective devices for electrical networks and for electrical user devices connected to an electrical network are designed so that, if necessary, they electrically isolate the power source from the user devices or loads.

In other words, the protective devices for electrical networks and for electrical user devices connected to an electrical network interrupt the power supply to one or more loads when, due to any malfunction, there is a short-circuit or when the load tries to draw a level of electrical power greater than that allowed (overload condition).

Prior art examples of protective devices are elements which intervene in the event of a short-circuit (for example magnetic circuit breakers), or elements which intervene in the event of an overload, that is to say, attempts to draw a level of electrical power greater than that allowed (for example thermal circuit breakers).

Both of the functions protecting against an overload and a short-circuit are normally integrated in a single device. In particular, in a well known and widely used example of a protective device, at structural level, a thermal circuit breaker and a magnetic circuit breaker are physically integrated in a single circuit breaker, normally closed, known as a magnetothermal circuit breaker (or even as a magnetothermal residual current operated circuit breaker).

In the prior art protective devices, when the load attempts to draw a level of power greater than that allowed, or when there is a short-circuit, the magnetothermal circuit breaker opens, electrically isolating the section of electrical network downstream of the circuit breaker.

Once the fault is identified and repaired, for example removing the cause of the short-circuit, the circuit breaker is returned to its original closed position, restoring the electrical connection between the loads and the electricity supply.

Although in many protective devices the latter operation, known to experts in the field as a "reset", must be performed by an operator, devices are known in which the circuit breaker is reset automatically.

In particular, automatic reset devices comprise reset means which, after the circuit breaker has opened, operate on the circuit breaker, returning it to the closed configuration.

Obviously, until the fault which caused the circuit breaker to open is removed, any attempt by the reset means to close the circuit breaker results in the circuit breaker immediately opening again.

When the cause of circuit breaker opening is removed, the reset means successfully close the circuit breaker and the power source is made available to the load again.

The Applicant has found that various aspects of the prior art protective devices for electrical networks and for electrical user devices connected to an electrical network can be improved upon.

Protective devices which do not make use of reset means have the disadvantage of always requiring the intervention of an operator to close the circuit breaker again, even if the cause of circuit breaker opening is instantaneously removed.

Consider, for example, the case in which the short-circuit or overload is generated by an electrical appliance connected to the power socket.

In this situation, once the electrical appliance is disconnected from the power socket, the cause of circuit breaker opening in the protective device is completely removed, but the circuit breaker remains open and requires intervention by an operator to close it.

In contrast, in prior art protective devices which comprise reset means, when the cause of circuit breaker opening must be resolved by a specialised operator, because for example it is not due to incorrect use of an electrical appliance, but to a fault in the section of electrical network connecting the circuit breaker to the load, the supply of current must be interrupted not only to the individual load, but also to all user devices on the local electrical network.

Since the reset attempts by the reset means continue to supply power to the load, even discontinuously, the power supply must be interrupted upstream of the circuit breaker in order to be able to intervene on the section of electrical network affected by the fault.

It is not always possible to immediately recognise the section of electrical network where the fault occurred, therefore the power supply to all loads supplied by the local electrical network must be interrupted, that is to say the power has to be "disconnected" from the main panel until the fault is repaired.

In this context, the main technical purpose which forms the basis of the present invention is to propose a protective device for electrical networks and for electrical user devices connected to an electrical network which is free of the above-mentioned disadvantages.

In particular, the aim of the present invention is to provide a protective device for electrical networks and for electrical user devices connected to an electrical network which does not require the intervention of an operator to restore the supply of current to a load when the cause of the interruption in the supply of current is instantaneously removed.

Another aim of the present invention is to propose a protective device for electrical networks and for electrical user devices connected to an electrical network which does not require interruption of the supply of current to more than one load in order to resolve faults in the electrical network.

The technical purpose indicated and the aims specified are substantially achieved by a protective device for electrical networks and for electrical user devices connected to an electrical network with the technical characteristics described in one or more of the claims herein.

Further characteristics and advantages of the present invention are more apparent in the detailed description below, with reference to a preferred, non-limiting embodiment of a protective device for electrical networks and for electrical user devices connected to an electrical network, illustrated in the accompanying drawings, in which:
- Figure 1 is a schematic representation of a protective device for electrical networks and for electrical user devices connected to an electrical network in accordance with the present invention;
- Figure 2 is a schematic representation of the protective device from Figure 1 installed on a particular electrical network.

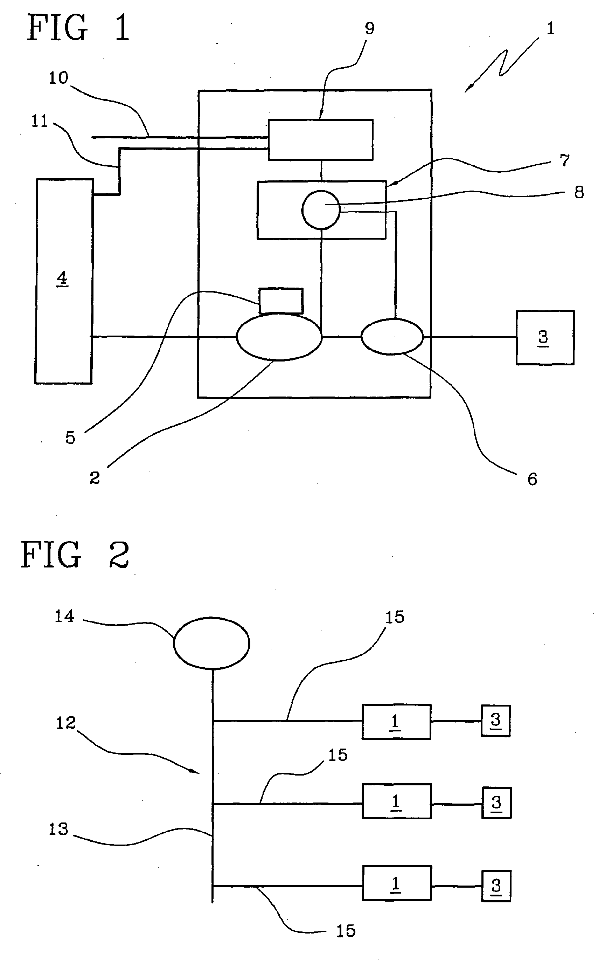

With reference to Figures 1 and 2, the numeral 1 denotes as a whole a protective device for electrical networks and for electrical user devices connected to an electrical network in accordance with the present invention.

The device 1 comprises at least a first circuit breaker 2 which can be switched between a normal closed condition and an open condition.

The first circuit breaker 2 operates by electrically disconnecting a load 3 from an electricity supply 4 after a short-circuit or an attempt to draw excessive electrical current (or overload) by the load 3. In other words, the first circuit breaker 2 selectively interrupts the power supply to the load 3. For this purpose, the first circuit breaker 2 can be electrically inserted between the electricity supply 4 and the load 3. Obviously, the electricity supply 4 may be any electrical power source, for example a high current capacity cable (supplying power to a home, office, factory), or it may be a medium or low capacity current cable, supplying power to a power socket, a light or the like, or alternatively it may be a generating set or the like. Similarly, the load 3 may be any load which can be applied to an electrical network, that is to say, any device requiring electrical energy in order to operate.

The first circuit breaker 2 preferably acts on the phase part of the cable which connects the electricity supply 4 to the load 3. The device 1 may be applied on both single-phase and multi-phase systems, in particular three-phase systems.

The device 1 also comprises automatic reconnection means 5 acting on the first circuit breaker 2. In operation, the reconnection means 5 automatically switch the first circuit breaker 2 to the closed condition when the latter has opened after a short-circuit or an overload.

Obviously, if the cause of first circuit breaker 2 opening has not been resolved, each time the first circuit breaker 2 is closed by the reconnection means 5, the first circuit breaker 2 is immediately reopened.

The device 1 also comprises a second circuit breaker 6 operatively connected between the first circuit breaker 2 and the load 3. The second circuit breaker 6 can be switched between a closed position, in which the first circuit breaker 2 and the load 3 are electrically connected, and an open position in which the first circuit breaker 2 and the load 3 are electrically disconnected. Therefore, the second circuit breaker 6 is able to interrupt the supply of current to the load 3 irrespective of the condition of the first circuit breaker 2. In other words, when the second circuit breaker 6 is in the open position, the electrical connection between the electricity supply 4 and the load 3 is inhibited both when first circuit breaker 2 is in the open condition and when the first circuit breaker 2 is in the closed condition.

The device 1 also comprises a monitoring control unit 7 operatively connected to the first circuit breaker 2 and to the second circuit breaker 6. The monitoring control unit 7 switches the second circuit breaker 6 between the closed position and the open position. In operation, the monitoring control unit 7 opens the second circuit breaker 6 on the basis of information taken from the first circuit breaker 2. In particular, the monitoring control unit 7 detects the attempts by the first circuit breaker 2 to reset itself, that is to say, it detects the intervention of the reconnection means 5 on the first circuit breaker 2. The monitoring control unit 7 can detect this by assessing the fluctuations in voltage or current on the first circuit breaker 2. If the monitoring control unit 7 detects a predetermined number of reset attempts on the first circuit breaker 2, it opens the second circuit breaker 6. In this way, the power supply to the load is definitively interrupted.

The monitoring control unit 7 may be calibrated or preset to a predetermined number of automatic reset attempts, for example between 3 and 10, preferably 5.

The reconnection means 5 are preferably structurally integrated with the first circuit breaker 2, forming a single element.

In a first preferred embodiment in which the reconnection means 5 are structurally integrated with the first circuit breaker 2, the single element formed by the reconnection means 5 and the first circuit breaker 2 consists of an integrated system comprising a thermistor, whose temperature-dependent behaviour emulates the combined behaviour of the first circuit breaker 2 and the reconnection means 5. In particular, when the current passing through the thermistor reaches the maximum current threshold allowed, the material of which the thermistor is made heats up reaching a temperature threshold above which the electrical resistance at the ends of the thermistor becomes so high that it practically emulates a broken circuit, interrupting the passage of current in the thermistor. Following interruption of the passage of current the thermistor cools and its electrical resistance returns to values compatible with the passage of current, effectively making the circuit again. The thermistor resistance trend according to the temperature should preferably be stepped, with a noticeable and sudden increase in the resistance value in the range of temperatures corresponding to the maximum currents allowed. Thermistor devices of this type are also known as "resettable fuses" or "automatic reset fuses".

In a second embodiment, the first circuit breaker 2 and the reconnection means 5 form a single integrated element comprising a so-called automatic reset micro-circuit breaker.

However, even if it is less preferable due to the greater dimensions (and costs) involved, the reconnection means 5 and the first circuit breaker 2 may also be physically separate, whilst continuing to be operatively connected in the way described above. In the latter case, production of the first circuit breaker 2 may include the use of a traditional magnetothermal circuit breaker.

In one embodiment of the invention, the device 1 may comprise at least a plurality of first circuit breakers 2 connected in parallel, in such a way that they produce a threshold current value which is a multiple of that supported by the individual first circuit breaker 2. Obviously, there may also be as many reconnection means 5 as there are first circuit breakers 2 (so that the number of circuit breaker - reconnection means systems is equal to the number of parallel branches). Obviously, in the case in which the first circuit breaker 2 and the reconnection means 5 are integrated with one another in a single element or integrated system, a plurality of these elements or integrated systems are connected in parallel. By way of example, and with reference to the case in which the element consisting of the integration of the first circuit breaker 2 and the reconnection means 5 comprises a thermistor of the above-mentioned type, such a parallel connection may consist of four thermistors each limited to 4 Amperes of current. In this way, the current which can be drawn by the load 3 may be limited to 16 Amperes.

The second circuit breaker 6 may be a normally closed relay. In this way, intervention of the monitoring control unit 7 on the second circuit breaker 6 is limited to sending an electrical signal, even low powered, which breaks the second circuit breaker 6 circuit.

In another, third embodiment of the invention in which the reconnection means 5 are structurally integrated with the first circuit breaker 2 to form a single element, the single element formed by the reconnection means 5 and the first circuit breaker 2 consists of an integrated system comprising a transistor, whose control emulates the combined behaviour of the first circuit breaker 2 and the reconnection means 5. The transistor may be controlled by a specially prepared control unit. Advantageously and preferably, it may be controlled directly by the monitoring control unit 7.

The following is a description of the behaviour of the transistor emulating the behaviour of the combination of the first circuit breaker 2 and the reconnection means 5 with particular reference to the case in which the transistor is controlled directly by the monitoring control unit 7.

Obviously, experts in the field can easily relate the following logic to a specific control unit which is separate from the monitoring control unit 7.

The monitoring control unit 7 samples the current in the circuit with a predetermined sampling frequency and each time processes the information about the total current circulating in the circuit so as to monitor and keep under control increases in current over time. In particular, the monitoring control unit 7 cyclically (with a frequency equal to that of sampling or with a frequency linked to it) calculates the derivative of the current value as a function of the time, calculated relative to the variable constituted by the time itself. When, during sampling, the monitoring control unit 7 detects a very large, sudden increase in current (that is to say a high current derivative value as a function of the time calculated relative to the time itself), it sends a signal to the transistor to make the resistance at the ends of the latter so high that it practically emulates a broken circuit and so interrupts the passage of current in the transistor. At this point, after waiting for a predetermined time (which it may be possible to set), the monitoring control unit 7 controls the transistor, sending a signal which causes the electrical resistance to fall again, in such a way as to allow current to pass through the transistor again. The monitoring control unit 7 immediately resumes sampling and monitoring the current values and variations. The sampling frequency is preferably very high, in particular around a thousand times per second and, more preferably, many thousands of times per second (for example at least 15,000 times per second).

In another preferred embodiment the first circuit breaker 2, the reconnection means 5 and the second circuit breaker 6 are integrated in a single element. In particular, in an example of said embodiment, the single integrated element comprises the transistor described above which integrates inside it the functions of the first circuit breaker 2 and the connection means 5.

Advantageously, use of the transistor controlled by the monitoring control unit 7 as described above allows the transistor to also be used to emulate the behaviour of the second circuit breaker 6. In particular, the monitoring control unit 7, in the event of an overload or short-circuit indicated by an instantaneous increase in current, makes a predetermined number of attempts to re-establish the passage of current through the transistor. If, with all of these attempts, after re-activation of the current there are still anomalous increases in the current, on the final attempt the monitoring control unit 7 may send the transistor the signal for interruption of the passage of current and then keep the circuit stably broken until the cause of the overload or short-circuit is removed. In particular, removal of the cause of the overload or short-circuit may be indicated to the monitoring control unit 7 for example by resetting the monitoring control unit 7, or by sending an external signal to the latter to inform it that the passage of current in the transistor can be reenabled.

The transistor used for these embodiments is preferably of the field effect type, in particular of the type generically called "MOSFET". In this case the monitoring control unit 7 sends the signals for enabling and disabling the passage of current to the transistor terminal known as the "gate", whilst the current can pass through the transistor via another two terminals on the transistor.

The monitoring control unit 7 can take the necessary electrical power directly from the electricity supply 4, if necessary with a transformer (not illustrated) inserted between them, which may be integrated in the monitoring control unit 7.

However, the monitoring control unit 7 may be equipped with an internal battery (not illustrated) which provides the power necessary for operation.

The monitoring control unit 7 may also be powered in a different way, as indicated below with reference to an alternative embodiment of the device.

As described, in the event of an overload or short-circuit, the first circuit breaker 2 switches from the closed condition to the open position, interrupting the supply of electrical power to the load 3. The automatic reconnection means 5 intervene, attempting to close the first circuit breaker 2 again. The monitoring control unit 7 intervenes, detecting the number of reconnection attempts made by the reconnection means 5. If this number is greater than a predetermined value, that is to say, if the cause of the first circuit breaker 2 passing to the open condition is not instantaneously resolved, the monitoring control unit 7 issues the second circuit breaker 6 the command to pass to the open position, permanently isolating the electricity supply 4 from the load 3. In this way, a specialised operator can intervene, safely removing the cause of the first circuit breaker 2 opening.

Advantageously, to restore the power supply to the load 3, it is sufficient to communicate to the monitoring control unit 7 that it should close the second circuit breaker 6.

Such a communication may consist of simply interrupting, even just for an instant, the power supply to the monitoring control unit 7, in such a way as to reset its condition to the initial values, so that, when switched on again, the monitoring control unit 7 causes the second circuit breaker 6 to move to the closed position, reactivating the connection. In this way, the second circuit breaker 6 is promptly closed again. This operation may be performed manually, for example by opening the main power supply circuit breaker and immediately closing it again. The interruption in the supply of electricity to the network served by the main circuit breaker, unlike traditional systems, lasts for just a few fractions of a second (the time necessary to turn the main circuit breaker off then reset it immediately afterwards).

In the time necessary to repair the fault or resolve the problem which caused the overload or short-circuit on the line served by the protective device 1, safety is guaranteed by keeping the second circuit breaker 6 in the open position, without having to cut the power to the other branches of the network.

The monitoring control unit 7 may suitably be equipped with means 8 for receiving a signal, preferably integrated in the circuits of the monitoring control unit 7, for receiving external signals. Said external signals may, for example, cause the monitoring control unit 7 to switch the second circuit breaker 6 to the closed condition. Said signal may be a supply interruption signal which results in the monitoring control unit 7 "reset", or it may be an opening command signal.

Advantageously, the means 8 for receiving signals may also act on the first circuit breaker 2 or on the reconnection means 5 or on both, to receive information about the their status, necessary for switching the second circuit breaker 6 to the open position using the methods described above.

Advantageously, the device 1 comprises communication means 9 connected to the monitoring control unit 7. The communication means 9 can be connected to a remote station to allow an exchange of signals and/or information between the monitoring control unit 7 and the remote station.

In this context, the remote station is a system, outside the protective device 1 disclosed, able to receive, process and transmit information to the monitoring control unit 7. In other words, the remote station may be an electronic processor which, for example, communicates, through the communication means 9, to the monitoring control unit 7 (either directly or via the reception means 8) a command to close the second circuit breaker 6 irrespective of the presence of a short-circuit or overload.

In this way, the connection and the exchange of data between the monitoring control unit 7 and the remote station allows the supply of current to the load 3 to be controlled, de-activation of the load 3, for example because it is not used, or notification of second circuit breaker 6 opening to an operator.

The data exchange between the remote station and the monitoring control unit 7 occurs through at least one data transmission line 10 belonging to the communication means 9. Said data transmission line 10 is schematically represented in Figure 1 as an electrical data transmission cable. In this case, the communication means 9 may also comprise a low voltage power line 11 for supplying the monitoring control unit 7, thus providing another method for supplying electricity to the latter, referred to above. The low voltage power line 11 may take electrical power from the remote station or from the electricity supply 4 (in the latter case subject to suitable voltage transformation).

Moreover, the electricity line 11 and the data transmission line 10 may be integrated in the same connecting cable.

However, depending on requirements, the data transmission line 10 may advantageously consist of transmitters/receivers of electromagnetic waves, for example radio frequency or infrared.

In practice, advantageously, the protective device 1 disclosed is positioned in an electrical network 12 between a third circuit breaker 14 and a load 3. The third circuit breaker 14 could be a residual current operated circuit breaker, in particular of the magnetothermal type. The third circuit breaker 14 could be a magnetothermal circuit breaker, or a fuse (which may be resettable or of the automatic reset type).

More specifically, with reference to Figure 2, the protective device 1 disclosed optimises its use in a new-concept electrical network 12, called a single-wire electrical network. It must be specified that the term single-wire electrical network, illustrated in Figure 2, refers to an electrical network 12 comprising: a first electrical connection 13 which can be connected to an electricity supply through a third circuit breaker 14, preferably of the residual current operated type (but, as already indicated, it may be a magnetothermal circuit breaker, optionally of the residual current operated type, or a fuse which may be resettable or of the automatic reset type); at least a second electrical connection 15 connected to the first electrical connection 13; a protective device, in particular and very advantageously a protective device 1 according to the present invention, positioned on the second electrical connection 15 upstream of a corresponding load 3 connected to the second electrical connection. The first electrical connection 13 can supply a first maximum electrical power. The second electrical connection 15 can supply a second electrical power to a load 3. It should be noticed that the first electrical power, that is to say, that which can be supplied through the first electrical connection 13 is greater than the second electrical power, that is to say, that which is supplied by the second electrical connection 15.

In other words, the single-wire electrical network 12 comprises a line backbone, that is to say, the first electrical connection 13, extending from the third circuit breaker 14 and from which there extends a plurality of electrical cables, that is to say, the second electrical connections 15.

The line backbone 13 consists of cables with a cross-section greater than that of the electrical cables which constitute the second electrical connections 15. In this way, the electrical power which can pass through the backbone 13 is greater than that which can pass through the second electrical connections 15.

By placing a protective device 1 according to the present invention on each second electrical connection 15, each load 3, or each group of loads 3, can be controlled independently of the other loads.

Moreover, if a load must be added to the single-wire electrical network 12, it is sufficient to prepare a second electrical connection 15 extending from the load 3 to the line backbone 13 and place another protective device 1 on the second electrical connection 15 just installed. Advantageously, the protective device 1 may be very close to the load just installed, for example a power socket, or it may be integrated with it.

This avoids the need for an electrical connection extending from the load to the traditional electrical panel on which, as is known, both the residual current operated circuit breaker and the magnetothermal circuit breaker dedicated to the new load are located.

However, it should be emphasised that the protective device 1 disclosed can be installed on any electrical network, whether or not the latter is of the single-wire type described above.

Moreover, vice versa, even if the combination between the single-wire electrical distribution network and the protective device 1 disclosed allows the maximum result to be achieved and maximum optimisation in terms of the system for distribution of electricity in buildings, flats, offices, etc., many of the advantages offered by the concept of the single-wire electrical network are irrespective of the type of protective device used and placed immediately upstream of the relative load.

In particular, if, as is the single-wire case, there is a main line backbone with a suitable cross-section, it is possible to simply derive many local user devices with secondary lines (and corresponding protective devices) without overcrowding the main ducts which house the electrical cables in the walls. This minimises the risk of having to substitute the ducts and, as a result, of having to break the walls. This advantage is particularly important in the restructuring of old buildings in which the ducts have a cross-section which is not big enough to serve all of the new user devices in a traditional electrical energy distribution concept, that is to say, having a central panel to which all of the end user device lines are connected, meaning that they must all pass through the same ducts: even old ducts are usually able to house a main backbone of a single-wire distribution network which has a suitable cross-section.

The present invention proposes a protective device 1 which achieves the preset aims.

The first circuit breaker automatic reconnection means allow operator intervention to be avoided if the cause of the short-circuit or overload is instantaneously removed.

Moreover, the second circuit breaker allows the electricity supply to be electrically isolated from the load without having to "disconnect" the current from the main panel.

The invention therefore brings important advantages. Since the communication means connect the monitoring control unit to a remote station, they allow the immediate identification of the load to which the supply of current was inhibited after a short-circuit or an overload, speeding up operations for removing the cause of first circuit breaker opening.

Moreover, thanks to data transmission between the control unit and the remote station and between the remote station and the control unit, the communication means allow integration of the device 1 in a domotics network, that is to say, a system for management and checking of loads.

## Claims

1. A protective device for electrical networks, **characterised in that** it comprises:
- at least a first circuit breaker (2) which can be inserted between an electricity supply (4) and a load (3), switchable between a normal closed condition and an open condition to selectively interrupt the power supply to the load (3);
- automatic reconnection means (5), acting on the first circuit breaker (2) for automatically switching the first circuit breaker (2) to the closed condition after it has passed to the open condition;
- a second circuit breaker (6) operatively connected between the first circuit breaker (2) and the load (3), switchable between a closed position, in which the first circuit breaker (2) and the load (3) are electrically connected, and an open position in which the first circuit breaker (2) and the load (3) are electrically disconnected;
- a monitoring control unit (7) operatively connected to the first circuit breaker (2) and to the second circuit breaker (6) at least for switching the second circuit breaker (6) between the closed position and the open position.

2. The device according to claim 1, wherein the monitoring control unit (7) comprises means (8) for receiving signals from the first circuit breaker (2) and/or from the reconnection means (5) and switching the second circuit breaker (6) to the open position.

3. The device according to claim 2, wherein the reception means (8) also receive external signals for switching the second circuit breaker (6) to the closed position.

4. The device according to claim 1 or 2 or 3, comprising communication means (9) connected to the monitoring control unit (7) which can also be connected to a remote station, for transmitting the signals between the between the remote station and the monitoring control unit (7) and between the monitoring control unit (7) and the remote station.

5. The device according to claim 4, wherein the communication means (9) comprise at least one data transmission line (10) connecting the monitoring control unit (7) and the remote station.

6. The device according to claim 4 or 5, wherein the communication means (9) comprise a low voltage power line (11) for supplying the monitoring control unit (7).

7. The device according to any of the foregoing claims, comprising a plurality of first circuit breakers (2) connected in parallel.

8. The device according to any of the foregoing claims, comprising a plurality of first circuit breakers (2) connected in parallel and each equipped with corresponding reconnection means (5).

9. The device according to any of the foregoing claims, wherein the first circuit breaker (2) and the relative reconnection means (5) are integrated in a single element.

10. The device according to claim 9, wherein said single element comprises an automatic reset micro-circuit breaker.

11. The device according to claim 10, wherein said single element comprises a thermistor.

12. The device according to claim 9, wherein said single element comprises a transistor.

13. The device according to any of the foregoing claims, wherein the second circuit breaker (6) is a normally closed relay.

14. The device according to any of the claims from 1 to 9, wherein the first circuit breaker (2), the relative reconnection means (5) and the second circuit breaker (6) are integrated in a single element.

15. The device according to claim 14, wherein said single element comprises a transistor.

16. The device according to claim 12 or 15, wherein the transistor is controlled by the monitoring control unit (7) .

17. The device according to claim 12 or 15 or 16, wherein the transistor is a field effect transistor.

18. The device according to claim 17, wherein the transistor is of the type called "MOSFET".

19. An electrical power distribution network, **characterised in that** it comprises at least one protective device (1) according to one or more of the foregoing claims.

20. The electrical distribution network according to claim 19, comprising: a first electrical connection (13) which can be connected to an electricity supply (4) through a third circuit breaker (14) for supplying a first maximum electrical power; at least a second electrical connection (15) connected to the first electrical connection (13) for supplying a second electrical power to a load (3), the first electrical power being greater than the second electrical power.

21. The electrical distribution network according to claim 20, wherein the protective device (1) operates on the second electrical connection (15).

22. An electrical distribution network **characterised in that** it comprises: a first electrical connection (13) which can be connected to an electricity supply (4) through a circuit breaker (14) for supplying a first maximum electrical power; at least a second electrical connection (15) connected to the first electrical connection (13) for supplying a second electrical power to a load (3), the first electrical power being greater than the second electrical power; a device for protecting against overloads and/or short-circuits operating on the second electrical connection (15).
